# EUROPEAN PATENT APPLICATION

(11) **EP 4 804 665 A1**
(43) Date of publication of application: **09.09.2026**
(21) Application number: 24884443.3
(22) Date of filing: 17.10.2024
(51) Int. Cl.: H04W 68/00

(54) **PAGING METHOD AND APPARATUS, AND STORAGE MEDIUM**

(30) Priority: 02.11.2023 CN 202311466501
(71) Applicant: CICT Mobile Communication Technology Co., Ltd., Canglong Island, Jiangxia District Wuhan, Hubei 430205 (CN)
(72) Inventor: LI, Huixin, Wuhan, Hubei 430205 (CN); GU, Xiaofei, Wuhan, Hubei 430205 (CN); CHENG, Zhimi, Wuhan, Hubei 430205 (CN)
(74) Representative: Ipsilon
(86) International application number: PCT/CN2024/125449
(87) International publication number: WO 2025/092439

(57) **Abstract**

The present disclosure provides a paging method, apparatus, and storage medium, relating to the field of communications technologies. The paging method includes: receiving a paging message, wherein the paging message includes an identifier of a target distributed network node in a 6G distributed network; and sending a service request to the target distributed network node based on the identifier of the target distributed network node, thereby enabling a user equipment (UE) to distinguish a paging source in a 6G distributed network scenario.

## Description

The present disclosure claims priority to the Chinese patent application filed with the China National Intellectual Property Administration on November 02, 2023, with application number 202311466501.4 and title "Paging Method, Apparatus, and Storage Medium", the entire content of which is incorporated herein by reference in the present disclosure.

### TECHNICAL FIELD

The present disclosure relates to the field of communications technologies, and in particular, to a paging method, apparatus, and storage medium.

### BACKGROUND

User Equipment (UE) may use Discontinuous Reception (DRX) in Radio Resource Control idle state (RRC_IDLE) and Radio Resource Control inactive state (RRC_INACTIVE) to reduce power consumption.

When there is downlink data to be transmitted to the UE on the network side, it is necessary to page the UE and re-establish an RRC connection. However, in a 6G distributed network scenario, distributed network nodes are deployed on demand, and there are a plurality of distributed network nodes on the network side, making it impossible for the UE to distinguish the source that initiates paging.

### SUMMARY

The present disclosure provides a paging method, apparatus, and storage medium, which enable a UE to distinguish a paging source in a 6G distributed network scenario.

In a first aspect, the present disclosure provides a paging method applied to a User Equipment (UE), including:
receiving a paging message, wherein the paging message includes an identifier of a target distributed network node in a 6G distributed network;
sending a service request to the target distributed network node based on the identifier of the target distributed network node.

Thereby, the problem of how a UE distinguishes a paging source in a 6G distributed network scenario is solved.

In an embodiment, the receiving a paging message includes:
determining a paging frame and a paging occasion of the target distributed network node according to a paging cycle of the UE within the target distributed network node and a 6G-S Temporary Mobile Subscriber Identity (6G-S-TMSI) allocated to the UE by the target distributed network node, wherein the 6G-S-TMSI includes the identifier of the target distributed network node, an Access and Mobility Management Function (AMF) set identifier, an AMF pointer, and a Temporary Mobile Subscriber Identity;
receiving the paging message based on the paging frame and the paging occasion of the target distributed network node.

In an embodiment, determining the paging frame and the paging occasion of the target distributed network node according to the paging cycle of the UE within the target distributed network node and the 6G-S Temporary Mobile Subscriber Identity (6G-S-TMSI) allocated to the UE by the target distributed network node includes:
obtaining a first value by dividing the paging cycle of the UE within the target distributed network node by the number of paging frames in one paging cycle, obtaining a second value by performing a modulo operation on a user identity with the number of paging frames in one paging cycle, and determining a frame number of the paging frame based on a product of the first value and the second value, wherein the user identity is 6G-S-TMSI modulo 2048;
obtaining a logical index of the paging occasion in the paging frame by dividing the user identity by the number of paging frames in one paging cycle, performing a floor operation on the obtained result, and then performing a modulo operation with the number of paging occasions associated with one paging frame.

Thereby, a method for recalculating the paging frame and the paging occasion based on a new paging identifier is provided.

In an embodiment, the paging message includes the 6G-S-TMSI.

In an embodiment, the method further includes:
sending a first NAS message to each distributed network node to which the UE is connected, wherein the first NAS message includes a UE specific paging cycle;
receiving a second NAS message, wherein the second NAS message includes an identifier and a paging cycle of the target distributed network node;
determining a minimum value of the UE specific paging cycle and the paging cycle of the target distributed network node as the paging cycle of the UE within the target distributed network node.

In an embodiment, the method further includes:
sending a first NAS message to each distributed network node to which the UE is connected, wherein the first NAS message includes a UE specific paging cycle;
receiving one or more second NAS messages, wherein each second NAS message includes an identifier and a paging cycle of respective distributed network node;
determining a minimum value of the UE specific paging cycle and the paging cycle of each distributed network node as the paging cycle of the UE within all distributed network nodes;
sending the paging cycle of the UE within all distributed network nodes to a centralized network node of the 6G distributed network.

Thereby, A method for determining a paging cycle of each distributed network node is provided.

In a second aspect, the present disclosure provides a paging method applied to a distributed network node in a 6G distributed network, including:
sending a paging message to a User Equipment (UE), wherein the paging message includes an identifier of the distributed network node;
receiving a service request from the UE.

In an embodiment, the identifier of the distributed network node is carried in a 6G-S Temporary Mobile Subscriber Identity (6G-S-TMSI), and the 6G-S-TMSI includes the identifier of the distributed network node, an Access and Mobility Management Function (AMF) set identifier, an AMF pointer, and a Temporary Mobile Subscriber Identity.

In an embodiment, the method further includes:
generating the 6G-S-TMSI, and synchronizing the 6G-S-TMSI to a centralized network node of the 6G distributed network;
receiving a synchronization response sent by the centralized network node.

In an embodiment, the method further includes:
receiving the 6G-S-TMSI sent by the centralized network node of the 6G distributed network;
sending a synchronization response to the centralized network node.

In an embodiment, the method further includes:
receiving a first NAS message sent by the UE, wherein the first NAS message includes a UE specific paging cycle;
sending a second NAS message to the UE, wherein the second NAS message includes an identifier and a paging cycle of the distributed network node.

In an embodiment, the method further includes:
receiving the paging cycle of the distributed network node sent by the centralized network node of the 6G distributed network.

In a third aspect, the present disclosure provides a paging method applied to a Radio Access Network (RAN), including:
receiving a paging message, wherein the paging message includes a paging cycle of a target distributed network node in a 6G distributed network and a 6G-S Temporary Mobile Subscriber Identity (6G-S-TMSI), and the 6G-S-TMSI includes an identifier of the target distributed network node, an Access and Mobility Management Function (AMF) set identifier, an AMF pointer, and a Temporary Mobile Subscriber Identity;
determining a paging frame and a paging occasion of the target distributed network node according to the 6G-S-TMSI and a paging cycle of a User Equipment (UE) within the target distributed network node, wherein the paging cycle of the UE within the target distributed network node is determined based on the paging cycle of the target distributed network node and a UE specific paging cycle;
sending the paging message to the UE based on the paging frame and the paging occasion of the target distributed network node.

In an embodiment, determining the paging frame and the paging occasion of the target distributed network node according to the 6G-S-TMSI and the paging cycle of the UE within the target distributed network node includes:
obtaining a first value by dividing the paging cycle of the UE within the target distributed network node by the number of paging frames in one paging cycle, obtaining a second value by performing a modulo operation on a user identity with the number of paging frames in one paging cycle, and determining a frame number of the paging frame based on a product of the first value and the second value, wherein the user identity is 6G-S-TMSI modulo 2048;
obtaining a logical index of the paging occasion in the paging frame by dividing the user identity by the number of paging frames in one paging cycle, performing a floor operation on a result, and then performing a modulo operation with the number of paging occasions associated with one paging frame.

In a fourth aspect, the present disclosure provides a paging method applied to a centralized network node in a 6G distributed network, including:
generating a 6G-S Temporary Mobile Subscriber Identity (6G-S-TMSI), wherein the 6G-S-TMSI includes an identifier of a target distributed network node in the 6G distributed network, an Access and Mobility Management Function (AMF) set identifier, an AMF pointer, and a Temporary Mobile Subscriber Identity; sending the 6G-S-TMSI to the target distributed network node;
   or,
receiving a 6G-S Temporary Mobile Subscriber Identity (6G-S-TMSI) sent by a target distributed network node in the 6G distributed network, wherein the 6G-S-TMSI includes an identifier of the target distributed network node, an AMF set identifier, an AMF pointer, and a Temporary Mobile Subscriber Identity; sending a synchronization response to the target distributed network node.

In an embodiment, the method further includes:
sending a paging cycle of each distributed network node to each distributed network node of the 6G distributed network.

In an embodiment, the method further includes:
receiving a paging cycle of the UE within all distributed network nodes sent by a User Equipment (UE).

In a fifth aspect, the present disclosure provides a paging apparatus applied to a User Equipment (UE), including:
a receiving unit, configured to receive a paging message, wherein the paging message includes an identifier of a target distributed network node in a 6G distributed network;
a processing unit, configured to send a service request to the target distributed network node based on the identifier of the target distributed network node.

In an embodiment, the receiving unit includes:
a first determining module, configured to determine a paging frame and a paging occasion of the target distributed network node according to a paging cycle of the UE within the target distributed network node and a 6G-S Temporary Mobile Subscriber Identity (6G-S-TMSI) allocated to the UE by the target distributed network node, wherein the 6G-S-TMSI includes the identifier of the target distributed network node, an Access and Mobility Management Function (AMF) set identifier, an AMF pointer, and a Temporary Mobile Subscriber Identity;
a first receiving module, configured to receive the paging message based on the paging frame and the paging occasion of the target distributed network node.

In an embodiment, the first determining module includes:
a first determining submodule, configured to obtain a first value by dividing the paging cycle of the UE within the target distributed network node by the number of paging frames in one paging cycle, obtain a second value by performing a modulo operation on a user identity with the number of paging frames in one paging cycle, and determine a frame number of the paging frame based on a product of the first value and the second value, wherein the user identity is 6G-S-TMSI modulo 2048;
a second determining submodule, configured to obtain a logical index of the paging occasion in the paging frame by dividing the user identity by the number of paging frames in one paging cycle, performing a floor operation on a result, and then performing a modulo operation with the number of paging occasions associated with one paging frame.

In an embodiment, the paging message includes the 6G-S-TMSI.

In an embodiment, the apparatus further includes:
a first sending module, configured to send a first NAS message to each distributed network node to which the UE is connected, wherein the first NAS message includes a UE specific paging cycle;
a second receiving module, configured to receive a second NAS message, wherein the second NAS message includes an identifier and a paging cycle of the target distributed network node;
a second determining module, configured to determine a minimum value of the UE specific paging cycle and the paging cycle of the target distributed network node as the paging cycle of the UE within the target distributed network node.

In an embodiment, the apparatus further includes:
a second sending module, configured to send a first NAS message to each distributed network node to which the UE is connected, wherein the first NAS message includes a UE specific paging cycle;
a third receiving module, configured to receive one or more second NAS messages, wherein each second NAS message includes an identifier and a paging cycle of respective distributed network node;
a third determining module, configured to determine a minimum value of the UE specific paging cycle and the paging cycle of each distributed network node as the paging cycle of the UE within all distributed network nodes;
a third sending module, configured to send the paging cycle of the UE within all distributed network nodes to a centralized network node of the 6G distributed network.

In a sixth aspect, the present disclosure provides a paging apparatus applied to a distributed network node in a 6G distributed network, including:
a sending unit, configured to send a paging message to a User Equipment (UE), wherein the paging message includes an identifier of the distributed network node;
a receiving unit, configured to receive a service request from the UE.

In an embodiment, the identifier of the distributed network node is carried in a 6G-S Temporary Mobile Subscriber Identity (6G-S-TMSI), and the 6G-S-TMSI includes the identifier of the distributed network node, an Access and Mobility Management Function (AMF) set identifier, an AMF pointer, and a Temporary Mobile Subscriber Identity.

In an embodiment, the apparatus further includes:
a generating unit, configured to generate the 6G-S-TMSI and synchronize the 6G-S-TMSI to a centralized network node of the 6G distributed network;
a first receiving module, configured to receive a synchronization response sent by the centralized network node.

In an embodiment, the apparatus further includes:
a second receiving module, configured to receive the 6G-S-TMSI sent by the centralized network node of the 6G distributed network;
a first sending module, configured to send a synchronization response to the centralized network node.

In an embodiment, the apparatus further includes:
a third receiving module, configured to receive a first NAS message sent by the UE, wherein the first NAS message includes a UE specific paging cycle;
a second sending module, configured to send a second NAS message to the UE, wherein the second NAS message includes an identifier and a paging cycle of the distributed network node.

In an embodiment, the apparatus further includes:
a fourth receiving module, configured to receive the paging cycle of the distributed network node sent by the centralized network node of the 6G distributed network.

In a seventh aspect, the present disclosure provides a paging apparatus applied to a Radio Access Network (RAN), including:
a receiving unit, configured to receive a paging message, wherein the paging message includes a paging cycle of a target distributed network node in a 6G distributed network and a 6G-S Temporary Mobile Subscriber Identity (6G-S-TMSI), and the 6G-S-TMSI includes an identifier of the target distributed network node, an Access and Mobility Management Function (AMF) set identifier, an AMF pointer, and a Temporary Mobile Subscriber Identity;
a determining unit, configured to determine a paging frame and a paging occasion of the target distributed network node according to the 6G-S-TMSI and a paging cycle of a User Equipment (UE) within the target distributed network node, wherein the paging cycle of the UE within the target distributed network node is determined based on the paging cycle of the target distributed network node and a UE specific paging cycle;
a sending unit, configured to send the paging message to the UE based on the paging frame and the paging occasion of the target distributed network node.

In an embodiment, the determining unit includes:
a first determining module, configured to obtain a first value by dividing the paging cycle of the UE within the target distributed network node by the number of paging frames in one paging cycle, obtain a second value by performing a modulo operation on a user identity with the number of paging frames in one paging cycle, and determine a frame number of the paging frame based on a product of the first value and the second value, wherein the user identity is 6G-S-TMSI modulo 2048;
a second determining module, configured to obtain a logical index of the paging occasion in the paging frame by dividing the user identity by the number of paging frames in one paging cycle, performing a floor operation on a result, and then performing a modulo operation with the number of paging occasions associated with one paging frame.

In an eighth aspect, the present disclosure provides a paging apparatus applied to a centralized network node in a 6G distributed network, including:
a generating unit, configured to generate a 6G-S Temporary Mobile Subscriber Identity (6G-S-TMSI), wherein the 6G-S-TMSI includes an identifier of a target distributed network node in the 6G distributed network, an Access and Mobility Management Function (AMF) set identifier, an AMF pointer, and a Temporary Mobile Subscriber Identity; a first sending unit, configured to send the 6G-S-TMSI to the target distributed network node;
   or,
a receiving unit, configured to receive a 6G-S Temporary Mobile Subscriber Identity (6G-S-TMSI) sent by a target distributed network node in the 6G distributed network, wherein the 6G-S-TMSI includes an identifier of the target distributed network node, an AMF set identifier, an AMF pointer, and a Temporary Mobile Subscriber Identity; a second sending unit, configured to send a synchronization response to the target distributed network node.

In an embodiment, the apparatus further includes:
a third sending unit, configured to send a paging cycle of each distributed network node to each distributed network node of the 6G distributed network.

In an embodiment, the apparatus further includes:
a first receiving module, configured to receive a paging cycle of the UE within all distributed network nodes sent by a User Equipment (UE).

In a ninth aspect, the present disclosure provides a paging apparatus, including a memory, a transceiver, and a processor:
the memory, configured to store a computer program;
the transceiver, configured to transmit and receive data under the control of the processor;
the processor, configured to read the computer program from the memory and perform the following operations:
   receiving a paging message, wherein the paging message includes an identifier of a target distributed network node in a 6G distributed network;
   sending a service request to the target distributed network node based on the identifier of the target distributed network node.

In an embodiment, the processor, when configured to receive the paging message, is specifically configured to:
determine a paging frame and a paging occasion of the target distributed network node according to a paging cycle of the User Equipment (UE) within the target distributed network node and a 6G-S Temporary Mobile Subscriber Identity (6G-S-TMSI) allocated to the UE by the target distributed network node, wherein the 6G-S-TMSI includes the identifier of the target distributed network node, an Access and Mobility Management Function (AMF) set identifier, an AMF pointer, and a Temporary Mobile Subscriber Identity;
receive the paging message based on the paging frame and the paging occasion of the target distributed network node.

In an embodiment, the processor is configured to:
obtain a first value by dividing the paging cycle of the UE within the target distributed network node by the number of paging frames in one paging cycle, obtain a second value by performing a modulo operation on a user identity with the number of paging frames in one paging cycle, and determine a frame number of the paging frame based on a product of the first value and the second value, wherein the user identity is 6G-S-TMSI modulo 2048;
obtain a logical index of the paging occasion in the paging frame by dividing the user identity by the number of paging frames in one paging cycle, performing a floor operation on a result, and then performing a modulo operation with the number of paging occasions associated with one paging frame.

In an embodiment, the paging message includes the 6G-S-TMSI.

In an embodiment, the processor is configured to:
send a first NAS message to each distributed network node to which the UE is connected, wherein the first NAS message includes a UE specific paging cycle;
receive a second NAS message, wherein the second NAS message includes an identifier and a paging cycle of the target distributed network node;
determine a minimum value of the UE specific paging cycle and the paging cycle of the target distributed network node as the paging cycle of the UE within the target distributed network node.

In an embodiment, the processor is configured to:
send a first NAS message to each distributed network node to which the UE is connected, wherein the first NAS message includes a UE specific paging cycle;
receive one or more second NAS messages, wherein each second NAS message includes an identifier and a paging cycle of respective distributed network node;
determine a minimum value of the UE specific paging cycle and the paging cycle of each distributed network node as the paging cycle of the UE within all distributed network nodes;
send the paging cycle of the UE within all distributed network nodes to a centralized network node of the 6G distributed network.

In a tenth aspect, the present disclosure provides a paging apparatus, including a memory, a transceiver, and a processor:
The memory is configured to store a computer program; the transceiver is configured to transmit and receive data under the control of the processor; the processor is configured to read the computer program from the memory and perform the following operations:
sending a paging message to a User Equipment (UE), wherein the paging message includes an identifier of a distributed network node in a 6G distributed network;
receiving a service request from the UE.

In an embodiment, the identifier of the distributed network node is carried in a 6G-S Temporary Mobile Subscriber Identity (6G-S-TMSI), and the 6G-S-TMSI includes the identifier of the distributed network node, an Access and Mobility Management Function (AMF) set identifier, an AMF pointer, and a Temporary Mobile Subscriber Identity.

In an embodiment, the processor is configured to:
generate the 6G-S-TMSI, and synchronize the 6G-S-TMSI to a centralized network node of the 6G distributed network;
receive a synchronization response sent by the centralized network node.

In an embodiment, the processor is configured to:
receive the 6G-S-TMSI sent by the centralized network node of the 6G distributed network;
send a synchronization response to the centralized network node.

In an embodiment, the processor is configured to:
receive a first NAS message sent by the UE, wherein the first NAS message includes a UE specific paging cycle;
send a second NAS message to the UE, wherein the second NAS message includes an identifier and a paging cycle of the distributed network node.

In an embodiment, the processor is configured to:
receive the paging cycle of the distributed network node sent by the centralized network node of the 6G distributed network.

In an eleventh aspect, the present disclosure provides a paging apparatus, including a memory, a transceiver, and a processor:
The memory is configured to store a computer program; the transceiver is configured to transmit and receive data under the control of the processor; the processor is configured to read the computer program from the memory and perform the following operations:
receiving a paging message, wherein the paging message includes a paging cycle of a target distributed network node in a 6G distributed network and a 6G-S Temporary Mobile Subscriber Identity (6G-S-TMSI), and the 6G-S-TMSI includes an identifier of the target distributed network node, an Access and Mobility Management Function (AMF) set identifier, an AMF pointer, and a Temporary Mobile Subscriber Identity;
determining a paging frame and a paging occasion of the target distributed network node according to the 6G-S-TMSI and a paging cycle of a User Equipment (UE) within the target distributed network node, wherein the paging cycle of the UE within the target distributed network node is determined based on the paging cycle of the target distributed network node and a UE specific paging cycle;
sending the paging message to the UE based on the paging frame and the paging occasion of the target distributed network node.

In an embodiment, the processor is configured to:
obtain a first value by dividing the paging cycle of the UE within the target distributed network node by the number of paging frames in one paging cycle, obtain a second value by performing a modulo operation on a user identity with the number of paging frames in one paging cycle, and determine a frame number of the paging frame based on a product of the first value and the second value, wherein the user identity is 6G-S-TMSI modulo 2048;
obtain a logical index of the paging occasion in the paging frame by dividing the user identity by the number of paging frames in one paging cycle, performing a floor operation on a result, and then performing a modulo operation with the number of paging occasions associated with one paging frame.

In a twelfth aspect, the present disclosure provides a paging apparatus, including a memory, a transceiver, and a processor:
The memory is configured to store a computer program; the transceiver is configured to transmit and receive data under the control of the processor; the processor is configured to read the computer program from the memory and perform the following operations:
generate a 6G-S Temporary Mobile Subscriber Identity (6G-S-TMSI), wherein the 6G-S-TMSI includes an identifier of a target distributed network node in a 6G distributed network, an Access and Mobility Management Function (AMF) set identifier, an AMF pointer, and a Temporary Mobile Subscriber Identity; send the 6G-S-TMSI to the target distributed network node;
   or,
receive a 6G-S Temporary Mobile Subscriber Identity (6G-S-TMSI) sent by a target distributed network node in a 6G distributed network, wherein the 6G-S-TMSI includes an identifier of the target distributed network node, an AMF set identifier, an AMF pointer, and a Temporary Mobile Subscriber Identity; send a synchronization response to the target distributed network node.

In an embodiment, the processor is configured to:
send a paging cycle of each distributed network node to each distributed network node of the 6G distributed network.

In an embodiment, the processor is configured to:
receive a paging cycle of the UE within all distributed network nodes sent by a User Equipment (UE).

In a thirteenth aspect, the present disclosure provides a non-transitory readable storage medium, wherein the non-transitory readable storage medium stores a computer program, and the computer program is configured to cause a processor to execute the method according to the first aspect, the second aspect, the third aspect, or the fourth aspect.

It should be understood that the content described in the above summary section is not intended to limit key or important features of embodiments of the present disclosure, nor is it intended to limit the scope of the present disclosure. Other features of the present disclosure will become readily understood through the following description.

### BRIEF DESCRIPTION OF THE DRAWINGS

In order to explain technical schemes in embodiments of the present disclosure more clearly, the following will briefly introduce accompanying drawings that need to be used in the description of the embodiments. Obviously, the accompanying drawings in the following description are only some embodiments of the present disclosure, and for those of ordinary skill in the art, other drawings can be obtained based on these drawings without creative efforts.
FIG. 1 is a schematic diagram of a 6G distributed network architecture;
FIG. 2 is a first schematic flowchart of a paging method provided by an embodiment of the present disclosure;
FIG. 3 is a schematic diagram of a composition of a 6G-S-TMSI provided by an embodiment of the present disclosure;
FIG. 4 is a second schematic flowchart of a paging method provided by an embodiment of the present disclosure;
FIG. 5 is a first structural schematic diagram of a paging apparatus provided by an embodiment of the present disclosure;
FIG. 6 is a second structural schematic diagram of a paging apparatus provided by an embodiment of the present disclosure;
FIG. 7 is a third structural schematic diagram of a paging apparatus provided by an embodiment of the present disclosure;
FIG. 8 is a fourth structural schematic diagram of a paging apparatus provided by an embodiment of the present disclosure;
FIG. 9 is a fifth structural schematic diagram of a paging apparatus provided by an embodiment of the present disclosure;
FIG. 10 is a sixth structural schematic diagram of a paging apparatus provided by an embodiment of the present disclosure;
FIG. 11 is a seventh structural schematic diagram of a paging apparatus provided by an embodiment of the present disclosure;
FIG. 12 is a structural schematic diagram of a paging apparatus provided by an embodiment of the present disclosure.

### DETAILED DESCRIPTION

In the embodiments of the present disclosure, the term "and/or" describes an association relationship of associated objects, indicating that three relationships may exist. For example, A and/or B may represent the following three cases: A exists alone, both A and B exist, and B exists alone. The character "/" generally indicates that the associated objects before and after it are in an "or" relationship.

In the embodiments of the present disclosure, the term "plurality" means two or more, and other quantifiers are similar thereto.

The technical solutions in the embodiments of the present disclosure will be clearly and completely described below with reference to the accompanying drawings in the embodiments of the present disclosure. Obviously, the described embodiments are only some of the embodiments of the present disclosure, not all of them. Based on the embodiments in the present disclosure, all other embodiments obtained by those of ordinary skill in the art without creative efforts shall fall within the protection scope of the present disclosure.

Embodiments of the present disclosure provide a paging method and apparatus, enabling that a UE can distinguish a paging source in a 6G distributed network scenario.

The method and the apparatus are conceived based on the same application. Since the principles of the method and the apparatus for solving problems are similar, the implementations of the apparatus and the method may be referred to each other, and repeated descriptions are omitted.

The technical solutions provided by the embodiments of the present disclosure may be applied to a 6G system and evolved communication systems.

The terminal device involved in the embodiments of the present disclosure may be a device that provides a user with voice and/or data connectivity, a handheld device with a wireless connection function, or another processing device connected to a wireless modem. The terminal device may have different names in different systems. For example, the terminal device may be referred to as User Equipment (UE). The wireless terminal device may be a USB storage device, another personal computer memory device, or a dongle. The wireless terminal device may also communicate with one or more Core Networks (CN) via a Radio Access Network (RAN). The wireless terminal device may be a mobile terminal device, such as a mobile telephone (or "cellular" telephone) and a computer with a mobile terminal device, e.g., a portable, pocket, hand-held, computer-integrated, or vehicle-mounted mobile device that exchanges voice and/or data with the radio access network. For example, the wireless terminal device may be one or more of Personal Communication Service (PCS) telephones, cordless telephones, Session Initiation Protocol (SIP) telephones, Wireless Local Loop (WLL) stations, Personal Digital Assistant (PDA), personal computers, tablet computers, Machine-type Communication (MTC) terminal devices, and the like. The wireless terminal device may also be referred to as a system, subscriber unit, subscriber station, mobile station, mobile, remote station, access point, remote terminal, access terminal, user terminal, user agent, user device, as well as a wireless access device, router/modem that meets the definition, which is not limited in the embodiments of the present disclosure.

The network device involved in the embodiments of the present disclosure may be a base station, which may include multiple cells that provide services for terminals. Depending on the specific application scenario, the base station may also be referred to as an access point, or a device in an access network that communicates with a wireless terminal device over a radio interface through one or more sectors, or other names.The network device may be configured to mutually convert received over-the-air frames and Internet Protocol (IP) packets, and act as a router between the wireless terminal device and the rest of the access network, wherein the rest of the access network may include an Internet Protocol (IP) communication network. The network device may also coordinate attribute management of the radio interface.In some network architectures, the network device may include a Centralized Unit (CU) node and a Distributed Unit (DU) node, and the centralized unit and the distributed unit may also be geographically separated.The network device involved in the embodiments of the present disclosure may be a Core Network (CN) device.

In the embodiments of the present disclosure, descriptions such as the terminal device sending relevant information to a network-side device merely indicate that the terminal device transmits relevant information in the form of wireless signals, with the intended recipient being a network device, and the network device can obtain the relevant information by receiving the wireless signals.

The paging mechanism is first introduced below.

To achieve low power consumption as much as possible, the UE switches to a power-saving state (RRC_IDLE state, RRC_INACTIVE state) when there is no active service. At this moment, the core network does not know the exact location of the UE, i.e., which cell the UE is in, and thus cannot perform data transmission. Therefore, when downlink data for the UE arrives at the core network, the paging mechanism is needed to locate the UE. The core network/Next Generation Radio Access Network (NG-RAN) transmits a paging message to the UE, wherein the paging message is carried on the Physical Downlink Shared Channel (PDSCH) indicated by the Physical Downlink Control Channel (PDCCH). The UE only wakes up to receive the paging message within a fixed time, and may sleep for the rest of the time to reduce power consumption and prolong battery life. The cycle of each wake-up is called a DRX cycle. The UE monitors the PDCCH during the DRX cycle, receives the paging message sent to the UE, and triggers a Random Access Channel (RACH) procedure to enter the connected state, thereby receiving downlink data.

After DRX is enabled, the UE transmits a UE specific paging cycle (i.e., UE Specific DRX) to the Access and Mobility Management Function (AMF) during Initial Registration and Mobility Registration procedures. The AMF accepts or modifies the UE Specific DRX sent by the UE according to Operator Policy, which may be stored in the Registration Management DEREGISTERED (RM-DEREGISTERED) context. When the AMF pages the UE, the UE Specific DRX is carried to the gNB via an NGAP paging message. The formula for the UE monitoring paging cycle is as follows:$UE monitoring paging cycle = min \left(Cell default paging cycle, UE specific DRX\right) .$

For a UE in RRC_IDLE state and RRC_INACTIVE state, the UE wakes up only once at corresponding paging occasion in each paging cycle. The position of the paging message on the air interface is fixed, expressed by a Paging Frame (PF) and a Paging Occasion (PO). A PO is a set of PDCCH monitoring occasions, which may consist of multiple time slots (e.g., subframes or Orthogonal Frequency Division Multiplexing (OFDM) symbols), wherein paging Downlink Control Information (DCI) can be transmitted. A PF is a radio frame that may include one or more POs or the starting point of a PO.

The procedure of the UE calculating paging occasion includes two steps: determining PF and PO. The UE calculates PF and PO based on the paging cycle T and 5G-S Temporary Mobile Subscriber Identity (5G-S-TMSI), with the formulas as follows: $PF : \left(SFN+PF_offset\right) mod T = \left(T div N\right) * \left(UE_ID mod N\right) ;$$PO : i_s = floor \left(UE_ID / N\right) mod Ns$

Wherein SFN is the system frame number; PF_offset is an offset of the paging frame; mod denotes the modulo operation; T is the paging cycle of the UE; div denotes integer division; N is the number of PFs in one paging cycle; UE_ID = 5G-S-TMSI mod 1024. if the UE does not have a 5G-S-TMSI, e.g., when the UE has not yet registered with the network, the UE shall use the default identity UE_ID = 0 in the above PF and i_s formulas; floor denotes the floor operation; Ns is the number of POs associated with one PF; i_s is the logical index of the PO within the PF.

For the UE, the system frame number for receiving the paging message can be determined by calculating the PF, and the PO of the UE can be determined as the (i_s+1)-th PO within the PF by calculating i_s. After determining the position of the PF and the specific PO, the timing at which the UE should wake up to receive the paging message can be obtained, thereby sending a Service Request to the network device that sent the paging. The 5G-S-TMSI includes an AMF set ID, an AMF pointer, and a 5G Temporary Mobile Subscriber Identity (5G-TMSI), which can identify a unique AMF within an AMF Region.

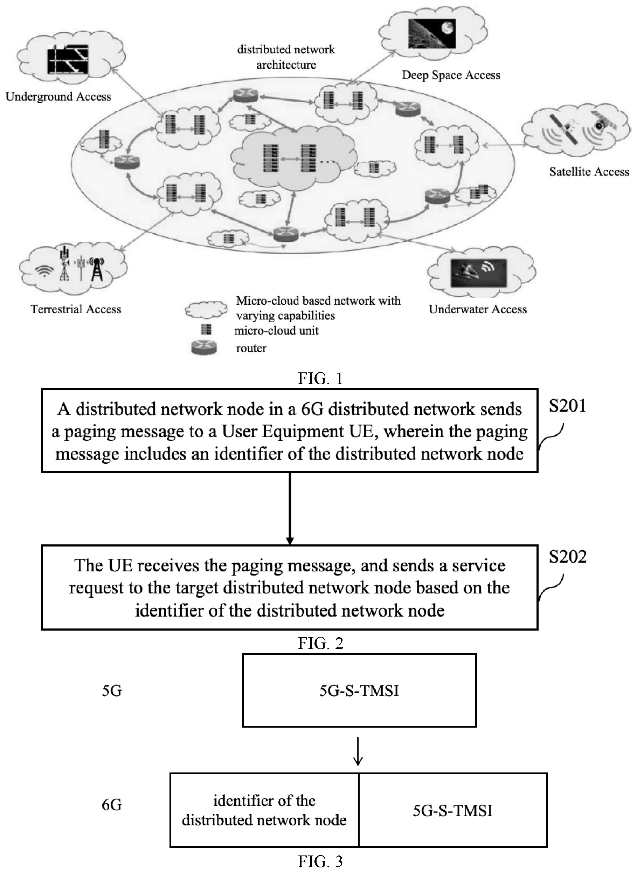

However, the 6G architecture will be a new converged network architecture featuring both centralized and distributed functions, integrating a centrally controlled mobile communication network and an open Internet, which needs to evolve beyond centralized control toward a distributed architecture, extend more network functions to the network edge, and deploy distributed homogeneous micro-cloud units with different functional levels, as shown in FIG. 1. Each micro-cloud unit is self-contained and has complete functions for control and data forwarding. A distributed network node refers to a micro-cloud unit deployed at the network edge, or an edge network.

In a 6G distributed network scenario, distributed network nodes are deployed on demand, and multiple distributed network nodes may be deployed within one AMF region. Under the existing paging mechanism, the UE cannot distinguish which distributed network node initiates the paging. Aiming at how the UE distinguishes the paging source and determines the paging cycle and paging occasion in a 6G distributed network scenario, embodiments of the present disclosure propose a paging method for a 6G distributed network scenario.

FIG. 2 is a first schematic flowchart of a paging method provided by an embodiment of the present disclosure. As shown in FIG. 2, the method includes:
S201. A distributed network node in a 6G distributed network sends a paging message to a User Equipment (UE), wherein the paging message includes an identifier of the distributed network node.

S202. The UE receives the paging message, and sends a service request to the target distributed network node based on the identifier of the distributed network node.

In an embodiment of the present disclosure, each distributed network node in the 6G distributed network has a respective identifier (NetworkNode ID). The distributed network node sends a paging message to the UE, wherein the paging message includes the identifier of the distributed network node. The UE receives the paging message, determines which distributed network node the paging comes from based on the identifier of the distributed network node included in the paging message, and then sends a service request to the distributed network node. The distributed network node receives the service request from the UE and performs subsequent processing. In this way, by carrying the identifier of the distributed network node in the paging message, the UE can distinguish the paging source in the 6G distributed network scenario.

For example, a target distributed network node sends a paging message to the UE, wherein the paging message carries the identifier of the target distributed network node. After receiving the paging message, the UE determines that the paging source is the target distributed network node based on the identifier of the target distributed network node carried in the paging message, and then sends a service request to the target distributed network node. The target distributed network node receives the service request from the UE and performs subsequent processing.

In an implementation, the identifier of the distributed network node included in the paging message may be carried in a 6G-S Temporary Mobile Subscriber Identity (6G-S-TMSI). That is, the paging message includes the 6G-S-TMSI, and the 6G-S-TMSI includes the distributed network node identifier. In an implementation, the 6G-S-TMSI may be obtained by extending the 5G-S-TMSI. As shown in FIG. 3, a distributed network node identifier is added on the basis of the information included in the 5G-S-TMSI. The 6G-S-TMSI includes a distributed network node identifier, an AMF set identifier, an AMF pointer, and a Temporary Mobile Subscriber Identity. When a UE initially registers with the network, a distributed network node may assign the 6G-S-TMSI to the UE. In a subsequent paging procedure, the 6G-S-TMSI may be carried in the paging message to distinguish the paging source.

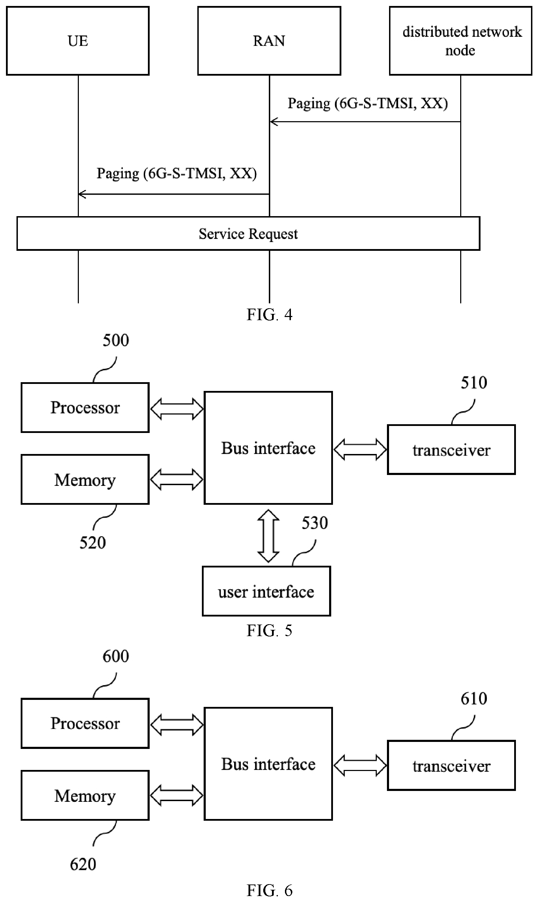

Based on the above embodiments, the procedure in which the UE determines the paging frame and paging cycle is described with reference to the embodiment in FIG. 4. FIG. 4 is a second schematic flowchart of a paging method provided by an embodiment of the present disclosure. The involved procedure is described with reference to FIG. 4:
1. A target distributed network node in a 6G distributed network sends a paging message to a Radio Access Network (RAN), wherein the paging message includes a paging cycle of the target distributed network node and the 6G-S-TMSI. The 6G-S-TMSI includes an identifier of the target distributed network node, an AMF set identifier, an AMF pointer, and a Temporary Mobile Subscriber Identity.
   The Temporary Mobile Subscriber Identity refers to the Temporary Mobile Subscriber Identity of the UE to be paged by the target distributed network node.
2. The RAN receives the paging message, and determines a paging frame and a paging occasion of the target distributed network node according to the 6G-S-TMSI and a paging cycle of the UE within the target distributed network node. The paging cycle of the UE within the target distributed network node is determined based on the paging cycle of the target distributed network node and a UE specific paging cycle.
   The paging frame and paging occasion of the target distributed network node refer to the paging frame and paging occasion of the UE within the target distributed network node.
   It should be noted that the embodiment of the present disclosure does not limit that Step 2 is performed after Step 1; that is, the step in which the RAN determines the paging frame and paging occasion may be performed earlier.
3. The RAN sends the paging message to the UE based on the paging frame and paging occasion of the target distributed network node.
4. The UE determines the paging frame and the paging occasion of the target distributed network node according to the paging cycle of the UE within the target distributed network node and the 6G-S-TMSI allocated to the UE by the target distributed network node. The 6G-S-TMSI includes the identifier of the target distributed network node identifier, the Access and Mobility Management Function (AMF) set identifier, the AMF pointer, and the Temporary Mobile Subscriber Identity.
   It should be noted that the embodiment of the present disclosure does not limit that Step 4 is performed after Step 3; that is, the step in which the UE determines the paging frame and paging occasion may be performed earlier.
5. The UE receives the paging message based on the paging frame and paging occasion of the target distributed network node.
6. The UE sends a Service Request to the target distributed network node based on the identifier of the target distributed network node in the paging message.

In the embodiment shown in FIG. 4, the method for determining the paging frame and paging occasion by the RAN and the UE is the same, and specifically includes:
obtaining a first value by dividing the paging cycle of the UE within the target distributed network node by the number of paging frames in one paging cycle; obtaining a second value by performing a modulo operation on the user identity with the number of paging frames in one paging cycle; and determining the frame number of the paging frame based on a product of the first value and the second value, wherein the user identity is obtained by performing a modulo operation on the 6G-S-TMSI with 2048.
obtaining the logical index of the paging occasion in the paging frame by dividing the user identity by the number of paging frames in one paging cycle, performing a floor operation on a result, and then performing a modulo operation with the number of paging occasions associated with one paging frame.

That is, the following formulas are used:$PF : \left(SFN+PF_offset\right) mod T = \left(T div N\right) * \left(UE_ID mod N\right) ;$$PO : i_s = floor \left(UE_ID / N\right) mod Ns$

Wherein SFN is the system frame number; PF_offset is an offset of the paging frame; mod denotes the modulo operation; T is the paging cycle of the UE within the target distributed network node; div denotes integer division; N is the number of paging frames (PF) in one paging cycle; UE_ID is the user identity, wherein UE_ID = 6G-S-TMSI mod 2048; if the UE does not have a 6G-S-TMSI, e.g., when the UE has not yet registered with the network, the UE shall use the default identity UE_ID = 0 in the above PF and i_s formulas; floor denotes the floor operation; Ns is the number of paging occasions (PO) associated with one PF; i_s is the logical index of the PO within the PF. For the RAN and the UE, the frame number of the PF and the logical index i_s of the PO within the PF can be calculated by the above formulas, thereby determining that the PO is the (i_s+1)-th PO in the PF.

The following describes how the paging cycle of the UE within the target distributed network node is determined.

In an implementation, the UE sends a first NAS message to each distributed network node to which the UE is connected, wherein the first NAS message includes a UE specific paging cycle. The UE receives a second NAS message, wherein the second NAS message includes an identifier and a paging cycle of the target distributed network node. The UE determines a minimum value of the UE specific paging cycle and the paging cycle of the target distributed network node as the paging cycle of the UE within the target distributed network node.

The UE notifies each distributed network node to which the UE is connected of the UE specific paging cycle via the first NAS message. If the distributed network node accepts the paging cycle, the distributed network node carries the paging cycle when initiating paging. If one or more distributed network nodes do not accept the paging cycle, for example, the target distributed network node does not accept the paging cycle, it needs to return a new paging cycle to the UE via the second NAS message, i.e., the paging cycle of the target distributed network node, and carry the identifier of the target distributed network node at the same time. According to the second NAS message, the UE selects the paging cycle with the smallest value from the UE specific paging cycle and the paging cycle returned by the target distributed network node as the paging cycle of the UE within the target distributed network node.

For the RAN, the RAN stores the UE specific paging cycle. The RAN adopts the same rule as the UE and selects the minimum value of the UE specific paging cycle and the paging cycle returned by the target distributed network node as the paging cycle of the UE within the target distributed network node.

Alternatively, a new paging cycle returned by the distributed network node to the UE may be determined by the distributed network node itself, or may be allocated to each distributed network node by a centralized network node in the 6G distributed network. The centralized network node may allocate different paging cycles to different distributed network nodes according to activity areas of the UE and synchronize them to the corresponding distributed network nodes. That is, the centralized network node sends the paging cycle of each distributed network node to each distributed network node of the 6G distributed network, and the distributed network node sends a synchronization response to the centralized network node. In a case that the distributed network node does not accept the UE specific paging cycle, the distributed network node may send the paging cycle allocated by the centralized network node to the UE via the second NAS message.

In an implementation, the UE sends a first NAS message to each distributed network node to which the UE is connected, wherein the first NAS message includes a UE specific paging cycle. The UE receives one or more second NAS messages, wherein each second NAS message includes an identifier and a paging cycle of a respective distributed network node. The UE determines a minimum value of the UE specific paging cycle and the paging cycle of each distributed network node as the paging cycle of the UE within all distributed network nodes. The UE sends the paging cycle of the UE within all distributed network nodes to the centralized network node of the 6G distributed network.

The UE notifies each connected distributed network node of the UE specific paging cycle via the first NAS message. If the distributed network node accepts the paging cycle, the distributed network node carries the paging cycle when initiating paging. If one or more distributed network nodes do not accept the paging cycle, the one or more distributed network nodes return a new paging cycle to the UE via the second NAS message. The second NAS message sent by each distributed network node includes the paging cycle of the distributed network node, i.e., the new paging cycle, and carries the identifier of the distributed network node at the same time. Based on the one or more second NAS messages, the UE selects the paging cycle with the smallest value from the UE specific paging cycle and the paging cycles returned by the one or more distributed network nodes as the paging cycle of the UE within all distributed network nodes, and sends the paging cycle of the UE within all distributed network nodes to the centralized network node.

For the RAN, the RAN stores the UE specific paging cycle. The RAN adopts the same rule as the UE and selects the minimum value between the UE specific paging cycle and the paging cycles returned by the one or more distributed network nodes as the paging cycle of the UE within all distributed network nodes.

Alternatively, the new paging cycle returned by each distributed network node to the UE may be determined by the distributed network node itself, or may be allocated to each distributed network node by the centralized network node. The centralized network node allocates the same paging cycle to each distributed network node and synchronizes it to the corresponding distributed network node. That is, the centralized network node sends the paging cycle of each distributed network node to each distributed network node of the 6G distributed network, and the distributed network node sends a synchronization response to the centralized network node. In the case that one or more distributed network nodes do not accept the UE specific paging cycle, the one or more distributed network nodes send the paging cycle allocated by the centralized network node to the UE via the second NAS message, so that the UE selects the paging cycle with the smallest value from the UE specific paging cycle and the paging cycles returned by the one or more distributed network nodes as the paging cycle of the UE within all distributed network nodes.

In embodiments of the present disclosure, the 6G-S-TMSI allocated by a distributed network node to the UE may be generated by the distributed network node, or may be generated by a centralized network node and then synchronized to the distributed network node.

In one implementation, a target distributed network node in the 6G distributed network generates a 6G-S-TMSI, wherein the 6G-S-TMSI includes an identifier of the target distributed network node, an AMF set identifier, an AMF pointer, and a Temporary Mobile Subscriber Identity, and the target distributed network node synchronizes the 6G-S-TMSI to a centralized network node of the 6G distributed network. After receiving the 6G-S-TMSI sent by the target distributed network node, the centralized network node sends a synchronization response to the target distributed network node.

In one implementation, the centralized network node of the 6G distributed network generates a 6G-S Temporary Mobile Subscriber Identity (6G-S-TMSI), wherein the 6G-S-TMSI includes an identifier of the target distributed network node in the 6G distributed network, the Access and Mobility Management Function (AMF) set identifier, the AMF pointer, and the Temporary Mobile Subscriber Identity, and sends the 6G-S-TMSI to the target distributed network node. The target distributed network node receives the 6G-S-TMSI sent by the centralized network node and sends a synchronization response to the centralized network node.

Embodiments of the present disclosure provide a paging method in a 6G distributed network scenario, which reconstructs a paging identifier applicable to the 6G distributed network, recalculates the paging frame and paging occasion based on the new paging identifier, and specifies a method for determining the paging cycle of each distributed network node, which not only solves the problem of how the UE distinguishes which distributed network node a paging comes from in the 6G distributed network scenario and fills the current technical gap, but also enables the UE to reduce monitoring times as much as possible and saves terminal power.

FIG. 5 is a first structural schematic diagram of a paging apparatus provided by an embodiment of the present disclosure. As shown in FIG. 5, the apparatus includes a memory 520, a transceiver 510, and a processor 500.

In FIG. 5, the bus architecture may include any number of interconnected buses and bridges, which specifically link together one or more processors represented by the processor 500 and various circuits of the memory represented by the memory 520. The bus architecture may also link together various other circuits such as peripherals, voltage regulators, and power management circuits, which are well known in the art, and therefore, no further description is provided herein. The bus interface provides an interface. The transceiver 510 may be a plurality of elements, i.e., including a transmitter and a receiver, providing a unit for communicating with various other apparatuses over transmission media. For example, the transmission media includes wireless channels, wired channels, optical cables, and other transmission media. For different user equipments, the user interface 530 may also be an interface capable of connecting externally or internally to required devices, including but not limited to a keypad, a display, a speaker, a microphone, a joystick, and the like.

The processor 500 is responsible for managing the bus architecture and general processing, and the memory 520 may store data used by the processor 500 when performing operations.

Optionally, the processor 500 may be a CPU (Central Processing Unit), an ASIC (Application Specific Integrated Circuit), an FPGA (Field-Programmable Gate Array), or a CPLD (Complex Programmable Logic Device). The processor may also adopt a multi-core architecture.

The processor 500 is configured to execute the method provided by the embodiments of the present disclosure according to the executable instructions by invoking the program stored in the memory 520. The processor 500 and the memory 520 may also be physically arranged separately.

The memory 520 is configured to store a computer program; the transceiver 510 is configured to transmit and receive data under the control of the processor 500; the processor 500 is configured to read the computer program from the memory 520 and perform the following operations:
receiving a paging message, wherein the paging message includes an identifier of a target distributed network node in a 6G distributed network;
sending a service request to the target distributed network node based on the identifier of the target distributed network node.

In an embodiment, the processor 500, when configured to receive the paging message, is specifically configured to:
determine a paging frame and a paging occasion of the target distributed network node according to a paging cycle of the User Equipment (UE) within the target distributed network node and a 6G-S Temporary Mobile Subscriber Identity (6G-S-TMSI) allocated to the UE by the target distributed network node, wherein the 6G-S-TMSI includes the identifier of the target distributed network node identifier, an Access and Mobility Management Function (AMF) set identifier, an AMF pointer, and a Temporary Mobile Subscriber Identity;
receiving the paging message based on the paging frame and the paging occasion of the target distributed network node.

In an embodiment, the processor 500 is configured to:
obtain a first value by dividing a paging cycle of the UE within the target distributed network node by the number of paging frames in one paging cycle, obtain a second value by performing a modulo operation on a user identity with the number of paging frames in one paging cycle, and determine a frame number of a paging frame based on a product of the first value and the second value, wherein the user identity is 6G-S-TMSI modulo 2048;
obtain a logical index of the paging occasion in the paging frame by dividing the user identity by the number of paging frames in one paging cycle, performing a floor operation on the obtained result, and then performing a modulo operation with the number of paging occasions associated with one paging frame.

In an embodiment, the paging message includes the 6G-S-TMSI.

In an embodiment, the processor 500 is configured to:
send a first NAS message to each distributed network node to which the UE is connected, wherein the first NAS message includes a UE specific paging cycle;
receive a second NAS message, wherein the second NAS message includes an identifier and a paging cycle of the target distributed network node;
determine a minimum value of the UE specific paging cycle and the paging cycle of the target distributed network node as the paging cycle of the UE within the target distributed network node.

In an embodiment, the processor 500 is configured to:
send a first NAS message to each distributed network node to which the UE is connected, wherein the first NAS message includes a UE specific paging cycle;
receive one or more second NAS messages, wherein each second NAS message includes an identifier and a paging cycle of a respective distributed network node;
determine a minimum value of the UE specific paging cycle and the paging cycle of each distributed network node as the paging cycle of the UE within all distributed network nodes;
send the paging cycle of the UE within all distributed network nodes to a centralized network node of the 6G distributed network.

It should be noted that the above apparatus provided in the embodiments of the present disclosure can implement all the method steps implemented by the foregoing method embodiments and achieve the same technical effects. The same parts and beneficial effects in this embodiment as those in the method embodiments are not described in detail herein.

FIG. 6 is a second structural schematic diagram of a paging apparatus provided by an embodiment of the present disclosure. As shown in FIG. 6, the paging apparatus includes a memory 620, a transceiver 610, and a processor 600.

In FIG. 6, the bus architecture may include any number of interconnected buses and bridges, which specifically link together one or more processors represented by the processor 600 and various circuits of the memory represented by the memory 620. The bus architecture may also link together various other circuits such as peripherals, voltage regulators, and power management circuits, which are well known in the art, and therefore, no further description is provided herein. The bus interface provides an interface. The transceiver 610 may be a plurality of elements, i.e., including a transmitter and a receiver, providing a unit for communicating with various other apparatuses over transmission media. The transmission media includes wireless channels, wired channels, optical cables, and other transmission media. The processor 600 is responsible for managing the bus architecture and general processing, and the memory 620 may store data used by the processor 600 when performing operations.

The processor 600 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The memory 620 is configured to store a computer program; the transceiver 610 is configured to transmit and receive data under the control of the processor 600; the processor 600 is configured to read the computer program from the memory 620 and perform the following operations:
sending a paging message to a User Equipment (UE), wherein the paging message includes an identifier of a distributed network node in a 6G distributed network;
receiving a service request from the UE.

In an embodiment, the identifier of the distributed network node is carried in a 6G-S Temporary Mobile Subscriber Identity (6G-S-TMSI), and the 6G-S-TMSI includes an identifier of the distributed network node, an Access and Mobility Management Function (AMF) set identifier, an AMF pointer, and a Temporary Mobile Subscriber Identity.

In an embodiment, the processor 600 is configured to:
generating the 6G-S-TMSI, and synchronizing the 6G-S-TMSI to a centralized network node of the 6G distributed network;
receiving a synchronization response sent by the centralized network node.

In an embodiment, the processor 600 is configured to:
receiving the 6G-S-TMSI sent by the centralized network node of the 6G distributed network;
sending a synchronization response to the centralized network node.

In an embodiment, the processor 600 is configured to:
receiving a first NAS message sent by the UE, wherein the first NAS message includes a UE specific paging cycle;
sending a second NAS message to the UE, wherein the second NAS message includes an identifier and a paging cycle of the distributed network node.

In an embodiment, the processor 600 is configured to:
receiving a paging cycle of the distributed network node sent by the centralized network node of the 6G distributed network.

It should be noted that the above apparatus provided in the embodiments of the present disclosure can implement all the method steps implemented by the foregoing method embodiments and achieve the same technical effects. The same parts and beneficial effects in this embodiment as those in the method embodiments are not described in detail herein.

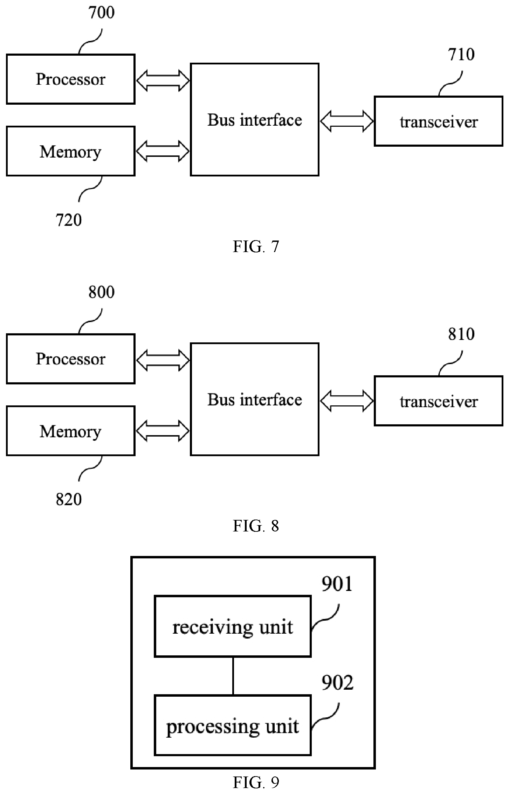

FIG. 7 is a third structural schematic diagram of a paging apparatus provided by an embodiment of the present disclosure. As shown in FIG. 7, the paging apparatus includes a memory 720, a transceiver 710, and a processor 700.

In FIG. 7, the bus architecture may include any number of interconnected buses and bridges, which specifically link together one or more processors represented by the processor 700 and various circuits of the memory represented by the memory 720. The bus architecture may also link together various other circuits such as peripherals, voltage regulators, and power management circuits, which are well known in the art, and therefore, no further description is provided herein. The bus interface provides an interface. The transceiver 710 may be a plurality of elements, i.e., including a transmitter and a receiver, providing a unit for communicating with various other apparatuses over transmission media. For example, the transmission media includes wireless channels, wired channels, optical cables, and other transmission media. The processor 700 is responsible for managing the bus architecture and general processing, and the memory 720 may store data used by the processor 700 when performing operations.

The processor 700 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The memory 720 is configured to store a computer program; the transceiver 710 is configured to transmit and receive data under the control of the processor 700; the processor 700 is configured to read the computer program from the memory 720 and perform the following operations:
receiving a paging message, wherein the paging message includes a paging cycle of a target distributed network node in a 6G distributed network and a 6G-S Temporary Mobile Subscriber Identity (6G-S-TMSI), and the 6G-S-TMSI includes an identifier of the target distributed network node, an Access and Mobility Management Function (AMF) set identifier, an AMF pointer, and a Temporary Mobile Subscriber Identity;
determining a paging frame and a paging occasion of the target distributed network node according to the 6G-S-TMSI and a paging cycle of a User Equipment (UE) within the target distributed network node, wherein the paging cycle of the UE within the target distributed network node is determined based on the paging cycle of the target distributed network node and a UE specific paging cycle;
sending the paging message to the UE based on the paging frame and the paging occasion of the target distributed network node.

In an embodiment, the processor 700 is configured to:
obtain a first value by dividing the paging cycle of the UE within the target distributed network node by the number of paging frames in one paging cycle, obtain a second value by performing a modulo operation on a user identity with the number of paging frames in one paging cycle, and determine a frame number of the paging frame based on a product of the first value and the second value, wherein the user identity is 6G-S-TMSI modulo 2048;
obtain a logical index of the paging occasion in the paging frame by dividing the user identity by the number of paging frames in one paging cycle, performing a floor operation on a result, and then performing a modulo operation with the number of paging occasions associated with one paging frame.

It should be noted that the above apparatus provided in the embodiments of the present disclosure can implement all the method steps implemented by the foregoing method embodiments and achieve the same technical effects. The same parts and beneficial effects in this embodiment as those in the method embodiments are not described in detail herein.

FIG. 8 is a fourth structural schematic diagram of a paging apparatus provided by an embodiment of the present disclosure. As shown in FIG. 8, the paging apparatus includes a memory 820, a transceiver 810, and a processor 800.

In FIG. 8, the bus architecture may include any number of interconnected buses and bridges, which specifically link together one or more processors represented by the processor 800 and various circuits of the memory represented by the memory 820. The bus architecture may also link together various other circuits such as peripherals, voltage regulators, and power management circuits, which are well known in the art, and therefore, no further description is provided herein. The bus interface provides an interface. The transceiver 810 may be a plurality of elements, i.e., including a transmitter and a receiver, providing a unit for communicating with various other apparatuses over transmission media. For example the transmission media includes wireless channels, wired channels, optical cables, and other transmission media. The processor 800 is responsible for managing the bus architecture and general processing, and the memory 820 may store data used by the processor 800 when performing operations.

The processor 800 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The memory 820 is configured to store a computer program; the transceiver 810 is configured to transmit and receive data under the control of the processor 800; the processor 800 is configured to read the computer program from the memory 820 and perform the following operations:
generating a 6G-S Temporary Mobile Subscriber Identity (6G-S-TMSI), wherein the 6G-S-TMSI includes an identifier of a target distributed network node in a 6G distributed network, an Access and Mobility Management Function (AMF) set identifier, an AMF pointer, and a Temporary Mobile Subscriber Identity; send the 6G-S-TMSI to the target distributed network node;
   or,
receive a 6G-S Temporary Mobile Subscriber Identity (6G-S-TMSI) sent by a target distributed network node in a 6G distributed network, wherein the 6G-S-TMSI includes an identifier of the target distributed network node, an AMF set identifier, an AMF pointer, and a Temporary Mobile Subscriber Identity; send a synchronization response to the target distributed network node.

In an embodiment, the processor 800 is configured to:
send a paging cycle of each distributed network node to each distributed network node of the 6G distributed network.

In an embodiment, the processor 800 is configured to:
receive a paging cycle of the UE within all distributed network nodes sent by a User Equipment (UE).

It should be noted that the above apparatus provided in the embodiments of the present disclosure can implement all the method steps implemented by the foregoing method embodiments and achieve the same technical effects. The same parts and beneficial effects in this embodiment as those in the method embodiments are not described in detail herein.

FIG. 9 is a fifth structural schematic diagram of a paging apparatus provided by an embodiment of the present disclosure. As shown in FIG. 9, the paging apparatus includes:
a receiving unit 901, configured to receive a paging message, wherein the paging message includes an identifier of a target distributed network node in a 6G distributed network;
a processing unit 902, configured to send a service request to the target distributed network node based on the identifier of the target distributed network node.

In an embodiment, the receiving unit 901 includes:
a first determining module, configured to determine a paging frame and a paging occasion of the target distributed network node according to a paging cycle of a User Equipment (UE) within the target distributed network node and a 6G-S Temporary Mobile Subscriber Identity (6G-S-TMSI) allocated to the UE by the target distributed network node, wherein the 6G-S-TMSI includes the identifier of the target distributed network node, an Access and Mobility Management Function (AMF) set identifier, an AMF pointer, and a Temporary Mobile Subscriber Identity;
a first receiving module, configured to receive the paging message based on the paging frame and the paging occasion of the target distributed network node.

In an embodiment, the first determining module includes:
a first determining submodule, configured to obtain a first value by dividing the paging cycle of the UE within the target distributed network node by the number of paging frames in one paging cycle, obtain a second value by performing a modulo operation on a user identity with the number of paging frames in one paging cycle, and determine a frame number of the paging frame based on a product of the first value and the second value, wherein the user identity is 6G-S-TMSI modulo 2048;
a second determining submodule, configured to obtain a logical sequence number of the paging occasion in the paging frame by dividing the user identity by the number of paging frames in one paging cycle, performing a floor operation on a result, and then performing a modulo operation with the number of paging occasions associated with one paging frame.

In an embodiment, the paging message includes the 6G-S-TMSI.

In an embodiment, the apparatus further includes:
a first sending module, configured to send a first NAS message to each distributed network node to which the UE is connected, wherein the first NAS message includes a UE specific paging cycle;
a second receiving module, configured to receive a second NAS message, wherein the second NAS message includes an identifier and a paging cycle of the target distributed network node;
a second determining module, configured to determine a minimum value of the UE specific paging cycle and the paging cycle of the target distributed network node as the paging cycle of the UE within the target distributed network node.

In an embodiment, the apparatus further includes:
a second sending module, configured to send a first NAS message to each distributed network node to which the UE is connected, wherein the first NAS message includes a UE specific paging cycle;
a third receiving module, configured to receive one or more second NAS messages, wherein each second NAS message includes an identifier and a paging cycle of respective distributed network node;
a third determining module, configured to determine a minimum value of the UE specific paging cycle and the paging cycle of each distributed network node as the paging cycle of the UE within all distributed network nodes;
a third sending module, configured to send the paging cycle of the UE within all distributed network nodes to a centralized network node of the 6G distributed network.

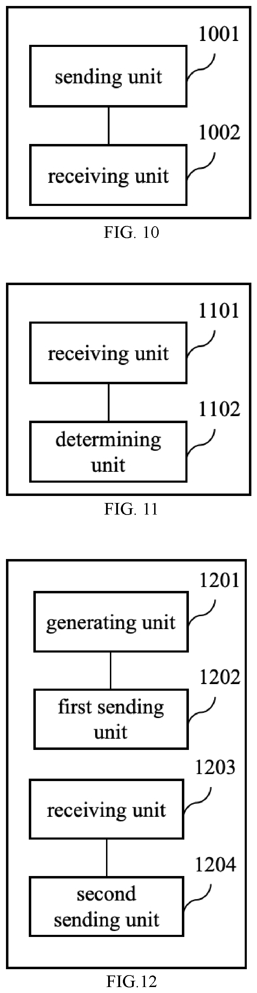

FIG. 10 is a sixth structural schematic diagram of a paging apparatus provided by an embodiment of the present disclosure. As shown in FIG. 10, the paging apparatus includes:
a sending unit 1001, configured to send a paging message to a User Equipment (UE), wherein the paging message includes an identifier of a distributed network node;
a receiving unit 1002, configured to receive a service request from the UE.

In an embodiment, the identifier of the distributed network node is carried in a 6G-S Temporary Mobile Subscriber Identity (6G-S-TMSI), and the 6G-S-TMSI includes the identifier of the distributed network node, an Access and Mobility Management Function (AMF) set identifier, an AMF pointer, and a Temporary Mobile Subscriber Identity.

In an embodiment, the apparatus further includes:
a generating unit, configured to generate the 6G-S-TMSI and synchronize the 6G-S-TMSI to a centralized network node of the 6G distributed network;
a first receiving module, configured to receive a synchronization response sent by the centralized network node.

In an embodiment, the apparatus further includes:
a second receiving module, configured to receive the 6G-S-TMSI sent by the centralized network node of the 6G distributed network;
a first sending module, configured to send a synchronization response to the centralized network node.

In an embodiment, the apparatus further includes:
a third receiving module, configured to receive a first NAS message sent by the UE, wherein the first NAS message includes a UE specific paging cycle;
a second sending module, configured to send a second NAS message to the UE, wherein the second NAS message includes the identifier and the paging cycle of the distributed network node.

In an embodiment, the apparatus further includes:
a fourth receiving module, configured to receive the paging cycle of the distributed network node sent by the centralized network node of the 6G distributed network.

FIG. 11 is a seventh structural schematic diagram of a paging apparatus provided by an embodiment of the present disclosure. As shown in FIG. 11, the paging apparatus includes:
a receiving unit 1101, configured to receive a paging message, wherein the paging message includes a paging cycle of a target distributed network node in a 6G distributed network and a 6G-S Temporary Mobile Subscriber Identity (6G-S-TMSI), and the 6G-S-TMSI includes an identifier of the target distributed network node, an Access and Mobility Management Function (AMF) set identifier, an AMF pointer, and a Temporary Mobile Subscriber Identity;
a determining unit 1102, configured to determine a paging frame and a paging occasion of the target distributed network node according to the 6G-S-TMSI and a paging cycle of a User Equipment (UE) within the target distributed network node, wherein the paging cycle of the UE within the target distributed network node is determined based on the paging cycle of the target distributed network node and a UE specific paging cycle;
a sending unit 1103, configured to send the paging message to the UE based on the paging frame and the paging occasion of the target distributed network node.

In an embodiment, the determining unit 1102 includes:
a first determining module, configured to obtain a first value by dividing the paging cycle of the UE within the target distributed network node by the number of paging frames in one paging cycle, obtain a second value by performing a modulo operation on a user identity with the number of paging frames in one paging cycle, and determine a frame number of the paging frame based on a product of the first value and the second value, wherein the user identity is 6G-S-TMSI modulo 2048;
a second determining module, configured to obtain a logical index of the paging occasion in the paging frame by dividing the user identity by the number of paging frames in one paging cycle, performing a floor operation on a result, and then performing a modulo operation with the number of paging occasions associated with one paging frame.

FIG. 12 is an eighth structural schematic diagram of a paging apparatus provided by an embodiment of the present disclosure. As shown in FIG. 12, the paging apparatus includes:
a generating unit 1201, configured to generate a 6G-S Temporary Mobile Subscriber Identity (6G-S-TMSI), wherein the 6G-S-TMSI includes an identifier of a target distributed network node in a 6G distributed network, an Access and Mobility Management Function (AMF) set identifier, an AMF pointer, and a Temporary Mobile Subscriber Identity; a first sending unit 1202, configured to send the 6G-S-TMSI to the target distributed network node;
   or,
a receiving unit 1203, configured to receive a 6G-S Temporary Mobile Subscriber Identity (6G-S-TMSI) sent by a target distributed network node in a 6G distributed network, wherein the 6G-S-TMSI includes an identifier of the target distributed network node, an AMF set identifier, an AMF pointer, and a Temporary Mobile Subscriber Identity; a second sending unit 1204, configured to send a synchronization response to the target distributed network node.

In an embodiment, the apparatus further includes:
a third sending unit, configured to send a paging cycle of each distributed network node to each distributed network node of the 6G distributed network.

In an embodiment, the apparatus further includes:
a first receiving module, configured to receive a paging cycle of the UE within all distributed network nodes sent by a User Equipment (UE).

It should be noted that the division of units in the embodiments of the present disclosure is illustrative and is merely a logical function division, and other division manners may be adopted in actual implementation.In addition, each functional unit in each embodiment of the present disclosure may be integrated into one processing unit, each unit may exist alone physically, or two or more units may be integrated into one unit.The above integrated unit may be implemented in the form of hardware or in the form of a software functional unit.

When the integrated unit is implemented in the form of a software functional unit and sold or used as an independent product, it may be stored in a processor-readable storage medium.Based on this understanding, the technical solution of the present disclosure, in essence, or the part that contributes to the prior art, or all or part of the technical solution, may be embodied in the form of a computer software product. The computer software product is stored in a storage medium and includes several instructions to enable a computer device (which may be a personal computer, a server, a network device, etc.) or a processor to perform all or part of the steps of the method described in various embodiments of the present disclosure.

It should be noted that the above apparatus provided in the embodiments of the present disclosure can implement all the method steps implemented by the foregoing method embodiments and achieve the same technical effects. The same parts and beneficial effects in this embodiment as those in the method embodiments are not described in detail herein.

The present disclosure provides a non-transitory readable storage medium, wherein the non-transitory readable storage medium stores a computer program, and the computer program is used to cause a processor to execute the method according to any one of the foregoing embodiments.

The readable storage medium may be any available medium or data storage device that can be accessed by the processor, including but not limited to magnetic memory (e.g., floppy disk, hard disk, magnetic tape, magneto-optical disk (MO), etc.), optical memory (e.g., CD, DVD, BD, HVD, etc.), and semiconductor memory (e.g., ROM, EPROM, EEPROM, non-volatile memory (NAND FLASH), solid-state drive (SSD)), etc.

Those skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware. Furthermore, the present disclosure may take the form of a computer program product embodied on one or more computer-usable storage media (including but not limited to disk memory, optical memory, etc.) having computer-usable program code embodied therein.

The present disclosure is described with reference to flowcharts and/or block diagrams of methods, apparatuses (systems), and computer program products according to embodiments of the present disclosure. It should be understood that each flow and/or block in the flowcharts and/or block diagrams, and combinations of flows and/or blocks in the flowcharts and/or block diagrams, can be implemented by computer-executable instructions. These computer-executable instructions may be provided to a processor of a general-purpose computer, special-purpose computer, embedded processor, or other programmable data processing apparatus to produce a machine, such that the instructions executed by the processor of the computer or other programmable data processing apparatus create means for implementing the functions specified in one or more flows of the flowcharts and/or one or more blocks of the block diagrams.

These processor-executable instructions may also be stored in a processor-readable memory that can direct a computer or other programmable data processing apparatus to function in a particular manner, such that the instructions stored in the processor-readable memory produce an article of manufacture including instruction means that implement the functions specified in one or more flows of the flowcharts and/or one or more blocks of the block diagrams.

Obviously, those skilled in the art can make various changes and modifications to the present disclosure without departing from the spirit and scope of the present disclosure. Thus, if these changes and modifications of the present disclosure fall within the scope of the claims of the present disclosure and their equivalent technologies, the present disclosure is also intended to include these changes and modifications.

## Claims

1. A paging method, applied to a User Equipment UE, **characterized by** comprising:
receiving a paging message, wherein the paging message comprises an identifier of a target distributed network node in a 6G distributed network;
sending a service request to the target distributed network node based on the identifier of the target distributed network node.

2. The method according to claim 1, **characterized in that** receiving the paging message comprises:
determining a paging frame and a paging occasion of the target distributed network node according to a paging cycle of the UE in the target distributed network node and a 6G-S Temporary Mobile Subscriber Identity 6G-S-TMSI allocated to the UE by the target distributed network node, wherein the 6G-S-TMSI comprises the identifier of the target distributed network node, an Access and Mobility Management Function AMF set identifier, an AMF pointer, and a Temporary Mobile Subscriber Identity;
receiving the paging message based on the paging frame and the paging occasion of the target distributed network node.

3. The method according to claim 2, **characterized in that** determining the paging frame and the paging occasion of the target distributed network node according to the paging cycle of the UE in the target distributed network node and the 6G-S-TMSI allocated to the UE by the target distributed network node comprises:
obtaining a first value by dividing the paging cycle of the UE in the target distributed network node by a number of paging frames in one paging cycle, obtaining a second value by performing a modulo operation on the user identity with the number of paging frames in one paging cycle, and determining a frame number of the paging frame based on a product of the first value and the second value, wherein the user identity is obtained by performing a modulo operation on the 6G-S-TMSI with 2048;
obtaining a logical index of the paging occasion in the paging frame by dividing the user identity by the number of paging frames in one paging cycle, performing a floor operation on a result, and then performing a modulo operation with the number of paging occasions associated with one paging frame.

4. The method according to Claim 2, **characterized in that** the paging message comprises the 6G-S-TMSI.

5. The method according to Claim 2, **characterized by** further comprising:
sending a first NAS message to each distributed network node to which the UE is connected respectively, wherein the first NAS message comprises a UE specific paging cycle;
receiving a second NAS message, wherein the second NAS message comprises an identifier and a paging cycle of the target distributed network node;
determining a minimum value of the UE specific paging cycle and the paging cycle of the target distributed network node as the paging cycle of the UE within the target distributed network node.

6. The method according to Claim 2, **characterized by** further comprising:
sending a first NAS message to each distributed network node to which the UE is connected respectively, wherein the first NAS message comprises a UE specific paging cycle;
receiving one or more second NAS messages, wherein each of the second NAS messages comprises an identifier of respective distributed network node and a paging cycle of the respective distributed network node;
determining a minimum value of the UE specific paging cycle and the paging cycle of each distributed network node as the paging cycle of the UE within all distributed network nodes;
sending the paging cycle of the UE within all distributed network nodes to a centralized network node of the 6G distributed network.

7. A paging method, applied to a distributed network node in a 6G distributed network, **characterized by** comprising:
sending a paging message to a User Equipment UE, wherein the paging message comprises an identifier of the distributed network node;
receiving a service request from the UE.

8. The method according to Claim 7, **characterized in that** the identifier of the distributed network node is carried in a 6G-S Temporary Mobile Subscriber Identity 6G-S-TMSI, and the 6G-S-TMSI comprises the identifier of the distributed network node, an Access and Mobility Management Function AMF set identifier, an AMF pointer, and a Temporary Mobile Subscriber Identity.

9. The method according to Claim 8, **characterized by** further comprising:
generating the 6G-S-TMSI, and synchronizing the 6G-S-TMSI to a centralized network node of the 6G distributed network;
receiving a synchronization response sent by the centralized network node.

10. The method according to Claim 8, **characterized by** further comprising:
receiving the 6G-S-TMSI sent by a centralized network node of the 6G distributed network;
sending a synchronization response to the centralized network node.

11. The method according to Claim 7, **characterized by** further comprising:
receiving a first NAS message sent by the UE, wherein the first NAS message comprises a UE specific paging cycle;
sending a second NAS message to the UE, wherein the second NAS message comprises an identifier of the distributed network node and a paging cycle of the distributed network node.

12. The method according to Claim 10, **characterized by** further comprising:
receiving a paging cycle of the distributed network node sent by the centralized network node of the 6G distributed network.

13. A paging method, applied to a Radio Access Network RAN, **characterized by** comprising:
receiving a paging message, wherein the paging message comprises a paging cycle of a target distributed network node in a 6G distributed network and a 6G-S Temporary Mobile Subscriber Identity 6G-S-TMSI, and the 6G-S-TMSI comprises an identifier of the target distributed network node, an Access and Mobility Management Function AMF set identifier, an AMF pointer, and a Temporary Mobile Subscriber Identity;
determining a paging frame and a paging occasion of the target distributed network node according to the 6G-S-TMSI and a paging cycle of a User Equipment UE within the target distributed network node, wherein the paging cycle of the UE within the target distributed network node is determined based on the paging cycle of the target distributed network node and a UE specific paging cycle;
sending the paging message to the UE based on the paging frame and the paging occasion of the target distributed network node.

14. The method according to Claim 13, **characterized in that** determining the paging frame and the paging occasion of the target distributed network node according to the 6G-S-TMSI and the paging cycle of the UE within the target distributed network node comprises:
obtaining a first value by dividing the paging cycle of the UE within the target distributed network node by the number of paging frames in one paging cycle, obtaining a second value by performing a modulo operation on a user identity with the number of paging frames in one paging cycle, and determining a frame number of the paging frame based on a product of the first value and the second value, wherein the user identity is obtained by performing a modulo operation on the 6G-S-TMSI with 2048;
obtaining a logical index of the paging occasion in the paging frame by dividing the user identity by the number of paging frames in one paging cycle, performing a floor operation on a result, and then performing a modulo operation with the number of paging occasions associated with one paging frame.

15. A paging method, applied to a centralized network node in a 6G distributed network, **characterized by** comprising:
generating a 6G-S Temporary Mobile Subscriber Identity 6G-S-TMSI, wherein the 6G-S-TMSI comprises an identifier of a target distributed network node in the 6G distributed network, an Access and Mobility Management Function AMF set identifier, an AMF pointer, and a Temporary Mobile Subscriber Identity; and sending the 6G-S-TMSI to the target distributed network node; or,
receiving a 6G-S-TMSI sent by the target distributed network node in the 6G distributed network, wherein the 6G-S-TMSI comprises an identifier of the target distributed network node, an AMF set identifier, an AMF pointer, and a Temporary Mobile Subscriber Identity; and sending a synchronization response to the target distributed network node.

16. The method according to Claim 15, **characterized by** further comprising:
sending a paging cycle of each distributed network node to each distributed network node of the 6G distributed network.

17. The method according to Claim 15, **characterized by** further comprising:
receiving paging cycles of the User Equipment UE within all distributed network nodes sent by the UE.

18. A paging apparatus, **characterized by** comprising:
a receiving unit, configured to receive a paging message, wherein the paging message comprises an identifier of a target distributed network node in a 6G distributed network;
a processing unit, configured to send a service request to the target distributed network node based on the identifier of the target distributed network node.

19. The apparatus according to Claim 18, **characterized in that** the receiving unit comprises:
a first determining module, configured to determine a paging frame and a paging occasion of the target distributed network node according to a paging cycle of a User Equipment UE in the target distributed network node and a 6G-S Temporary Mobile Subscriber Identity 6G-S-TMSI allocated to the UE by the target distributed network node, wherein the 6G-S-TMSI comprises the identifier of the target distributed network node, an Access and Mobility Management Function AMF set identifier, an AMF pointer, and a Temporary Mobile Subscriber Identity;
a first receiving module, configured to receive the paging message based on the paging frame and the paging occasion of the target distributed network node.

20. The apparatus according to Claim 19, **characterized in that** the first determining module comprises:
a first determining submodule, configured to obtain a first value by dividing the paging cycle of the UE in the target distributed network node by the number of paging frames in one paging cycle, obtaining a second value by performing a modulo operation on a user identity with the number of paging frames in one paging cycle, and determine a frame number of the paging frame based on a product of the first value and the second value, wherein the user identity is obtained by performing a modulo operation on the 6G-S-TMSI with 2048;
a second determining submodule, configured to obtain a logical index of the paging occasion in the paging frame by dividing the user identity by the number of paging frames in one paging cycle, performing a floor operation on a result, and then performing a modulo operation with the number of paging occasions associated with one paging frame.

21. The apparatus according to Claim 19, **characterized in that** the paging message comprises the 6G-S-TMSI.

22. The apparatus according to Claim 19, **characterized by** further comprising:
a first sending module, configured to send a first NAS message to each distributed network node to which the UE is connected, wherein the first NAS message comprises a UE specific paging cycle;
a second receiving module, configured to receive a second NAS message, wherein the second NAS message comprises the identifier of the target distributed network node and a paging cycle;
a second determining module, configured to determine a minimum value of the UE specific paging cycle and the paging cycle of the target distributed network node as the paging cycle of the UE within the target distributed network node.

23. The apparatus according to Claim 19, **characterized by** further comprising:
a second sending module, configured to send a first NAS message to each distributed network node to which the UE is connected, wherein the first NAS message comprises a UE specific paging cycle;
a third receiving module, configured to receive one or more second NAS messages, wherein each of the second NAS messages comprises an identifier and a paging cycle of respective distributed network node;
a third determining module, configured to determine a minimum value of the UE specific paging cycle and the paging cycle of each distributed network node as the paging cycle of the UE within all distributed network nodes;
a third sending module, configured to send the paging cycle of the UE within all distributed network nodes to a centralized network node of the 6G distributed network.

24. A paging apparatus, applied to a distributed network node in a 6G distributed network, **characterized by** comprising:
a sending unit, configured to send a paging message to a User Equipment UE, wherein the paging message comprises an identifier of the distributed network node;
a receiving unit, configured to receive a service request from the UE.

25. The apparatus according to Claim 24, **characterized in that** the identifier of the distributed network node is carried in a 6G-S Temporary Mobile Subscriber Identity 6G-S-TMSI, and the 6G-S-TMSI comprises the identifier of the distributed network node, an Access and Mobility Management Function AMF set identifier, an AMF pointer, and a Temporary Mobile Subscriber Identity.

26. The apparatus according to Claim 25, **characterized by** further comprising:
a generating unit, configured to generate the 6G-S-TMSI and synchronize the 6G-S-TMSI to a centralized network node of the 6G distributed network;
a first receiving module, configured to receive a synchronization response sent by the centralized network node.

27. The apparatus according to Claim 25, **characterized by** further comprising:
a second receiving module, configured to receive the 6G-S-TMSI sent by the centralized network node of the 6G distributed network;
a first sending module, configured to send a synchronization response to the centralized network node.

28. The apparatus according to Claim 24, **characterized by** further comprising:
a third receiving module, configured to receive a first NAS message sent by the UE, wherein the first NAS message comprises a UE specific paging cycle;
a second sending module, configured to send a second NAS message to the UE, wherein the second NAS message comprises an identifier of the distributed network node and a paging cycle.

29. The apparatus according to Claim 28, **characterized by** further comprising:
a fourth receiving module, configured to receive a paging cycle of the distributed network node sent by the centralized network node of the 6G distributed network.

30. A paging apparatus, applied to a Radio Access Network RAN, **characterized by** comprising:
a receiving unit, configured to receive a paging message, wherein the paging message comprises a paging cycle of a target distributed network node in a 6G distributed network and a 6G-S Temporary Mobile Subscriber Identity 6G-S-TMSI, and the 6G-S-TMSI comprises an identifier of the target distributed network node, an Access and Mobility Management Function AMF set identifier, an AMF pointer, and a Temporary Mobile Subscriber Identity;
a determining unit, configured to determine a paging frame and a paging occasion of the target distributed network node according to the 6G-S-TMSI and a paging cycle of a User Equipment UE within the target distributed network node, wherein the paging cycle of the UE within the target distributed network node is determined based on the paging cycle of the target distributed network node and a UE specific paging cycle;
a sending unit, configured to send the paging message to the UE based on the paging frame and the paging occasion of the target distributed network node.

31. The apparatus according to Claim 30, **characterized in that** the determining unit comprises:
a first determining module, configured to obtain a first value by dividing the paging cycle of the UE within the target distributed network node by the number of paging frames in one paging cycle, obtain a second value by performing a modulo operation on a user identity with the number of paging frames in one paging cycle, and determine a frame number of the paging frame based on a product of the first value and the second value, wherein the user identity is obtained by performing a modulo operation on the 6G-S-TMSI with 2048;
a second determining module, configured to obtain a logical sequence number of the paging occasion in the paging frame by dividing the user identity by the number of paging frames in one paging cycle, performing a floor operation on a result, and then performing a modulo operation with the number of paging occasions associated with one paging frame.

32. A paging apparatus, applied to a centralized network node in a 6G distributed network, **characterized by** comprising:
a generating unit, configured to generate a 6G-S Temporary Mobile Subscriber Identity 6G-S-TMSI, wherein the 6G-S-TMSI comprises an identifier of a target distributed network node in the 6G distributed network, an Access and Mobility Management Function AMF set identifier, an AMF pointer, and a Temporary Mobile Subscriber Identity; a first sending unit, configured to send the 6G-S-TMSI to the target distributed network node; or,
a receiving unit, configured to receive a 6G-S Temporary Mobile Subscriber Identity 6G-S-TMSI sent by the target distributed network node in the 6G distributed network, wherein the 6G-S-TMSI comprises an identifier of the target distributed network node, an AMF set identifier identifier, an AMF pointer, and a Temporary Mobile Subscriber Identity; a second sending unit, configured to send a synchronization response to the target distributed network node.

33. The apparatus according to Claim 32, **characterized by** further comprising:
a third sending unit, configured to send a paging cycle of each distributed network node to each distributed network node of the 6G distributed network.

34. The apparatus according to Claim 32, **characterized by** further comprising:
a first receiving module, configured to receive paging cycles of the User Equipment UE within all distributed network nodes sent by the UE.

35. A paging apparatus, **characterized by** comprising a memory, a transceiver, and a processor:
the memory, configured to store a computer program;
the transceiver, configured to transmit and receive data under the control of the processor;
the processor, configured to read the computer program in the memory and execute:
receiving a paging message, wherein the paging message comprises an identifier of a target distributed network node in a 6G distributed network;
sending a service request to the target distributed network node based on the identifier of the target distributed network node.

36. The apparatus according to Claim 35, **characterized in that** the processor, configured to receive the paging message, is configured to:
determine a paging frame and a paging occasion of the target distributed network node according to a paging cycle of a User Equipment UE in the target distributed network node and a 6G-S Temporary Mobile Subscriber Identity 6G-S-TMSI allocated to the UE by the target distributed network node, wherein the 6G-S-TMSI comprises the identifier of the target distributed network node, an Access and Mobility Management Function AMF set identifier, an AMF pointer, and a Temporary Mobile Subscriber Identity;
receive the paging message based on the paging frame and the paging occasion of the target distributed network node.

37. The apparatus according to Claim 36, **characterized in that** the processor is configured to:
obtain a first value by dividing the paging cycle of the UE in the target distributed network node by the number of paging frames in one paging cycle, obtain a second value by performing a modulo operation on a user identity with the number of paging frames in one paging cycle, and determine a frame number of the paging frame based on a product of the first value and the second value, wherein the user identity is obtained by performing a modulo operation on the 6G-S-TMSI with 2048;
obtain a logical index of the paging occasion in the paging frame by dividing the user identity by the number of paging frames in one paging cycle, perform a floor operation on a result, and then perform a modulo operation with the number of paging occasions associated with one paging frame.

38. The apparatus according to Claim 36, **characterized in that** the paging message comprises the 6G-S-TMSI.

39. The apparatus according to Claim 36, **characterized in that** the processor is configured to:
send a first NAS message to each distributed network node to which the UE is connected, wherein the first NAS message comprises a UE specific paging cycle;
receive a second NAS message, wherein the second NAS message comprises an identifier and a paging cycle of the target distributed network node;
determine a minimum value of the UE specific paging cycle and the paging cycle of the target distributed network node as the paging cycle of the UE within the target distributed network node.

40. The apparatus according to Claim 36, **characterized in that** the processor is configured to:
send a first NAS message to each distributed network node to which the UE is connected, wherein the first NAS message comprises a UE specific paging cycle;
receive one or more second NAS messages, wherein each of the second NAS messages comprises an identifier and a paging cycle of respective distributed network node;
determine a minimum value of the UE specific paging cycle and the paging cycle of each distributed network node as the paging cycle of the UE within all distributed network nodes;
send the paging cycle of the UE within all distributed network nodes to a centralized network node of the 6G distributed network.

41. A paging apparatus, **characterized by** comprising a memory, a transceiver, and a processor:
the memory, configured to store a computer program;
the transceiver, configured to transmit and receive data under the control of the processor;
the processor, configured to read the computer program in the memory and execute:
sending a paging message to a User Equipment UE, wherein the paging message comprises an identifier of a distributed network node in a 6G distributed network;
receiving a service request from the UE.

42. The apparatus according to Claim 41, **characterized in that** the identifier of the distributed network node is carried in a 6G-S Temporary Mobile Subscriber Identity 6G-S-TMSI, and the 6G-S-TMSI comprises the identifier of the distributed network node, an Access and Mobility Management Function AMF set identifier, an AMF pointer, and a Temporary Mobile Subscriber Identity.

43. The apparatus according to Claim 42, **characterized in that** the processor is configured to:
generate the 6G-S-TMSI, and synchronize the 6G-S-TMSI to a centralized network node of the 6G distributed network;
receive a synchronization response sent by the centralized network node.

44. The apparatus according to Claim 42, **characterized in that** the processor is configured to:
receive the 6G-S-TMSI sent by the centralized network node of the 6G distributed network;
send a synchronization response to the centralized network node.

45. The apparatus according to Claim 41, **characterized in that** the processor is configured to:
receive a first NAS message sent by the UE, wherein the first NAS message comprises a UE specific paging cycle;
send a second NAS message to the UE, wherein the second NAS message comprises an identifier of the distributed network node and a paging cycle.

46. The apparatus according to Claim 45, **characterized in that** the processor is configured to:
receive a paging cycle of the distributed network node sent by the centralized network node of the 6G distributed network.

47. A paging apparatus, **characterized by** comprising a memory, a transceiver, and a processor:
the memory, configured to store a computer program;
the transceiver, configured to transmit and receive data under the control of the processor;
the processor, configured to read the computer program in the memory and execute:
receiving a paging message, wherein the paging message comprises a paging cycle of a target distributed network node in a 6G distributed network and a 6G-S Temporary Mobile Subscriber Identity 6G-S-TMSI, and the 6G-S-TMSI comprises an identifier of the target distributed network node, an Access and Mobility Management Function AMF set identifier, an AMF pointer, and a Temporary Mobile Subscriber Identity;
determining a paging frame and a paging occasion of the target distributed network node according to the 6G-S-TMSI and a paging cycle of a User Equipment UE within the target distributed network node, wherein the paging cycle of the UE within the target distributed network node is determined based on the paging cycle of the target distributed network node and a UE specific paging cycle;
sending the paging message to the UE based on the paging frame and the paging occasion of the target distributed network node.

48. The apparatus according to Claim 47, **characterized in that** the processor is configured to:
obtain a first value by dividing the paging cycle of the UE within the target distributed network node by the number of paging frames in one paging cycle, obtain a second value by performing a modulo operation on a user identity with the number of paging frames in one paging cycle, and determine a frame number of the paging frame based on a product of the first value and the second value, wherein the user identity is obtained by performing a modulo operation on the 6G-S-TMSI with 2048;
obtain a logical index of the paging occasion in the paging frame by dividing the user identity by the number of paging frames in one paging cycle, performing a floor operation on a result, and then performing a modulo operation with the number of paging occasions associated with one paging frame.

49. A paging apparatus, **characterized by** comprising a memory, a transceiver, and a processor:
the memory, configured to store a computer program;
the transceiver, configured to transmit and receive data under the control of the processor;
the processor, configured to read the computer program in the memory and execute:
generating a 6G-S Temporary Mobile Subscriber Identity 6G-S-TMSI, wherein the 6G-S-TMSI comprises an identifier of a target distributed network node in a 6G distributed network, an Access and Mobility Management Function AMF set identifier, an AMF pointer, and a Temporary Mobile Subscriber Identity; and sending the 6G-S-TMSI to the target distributed network node; or,
receiving a 6G-S-TMSI sent by the target distributed network node in the 6G distributed network, wherein the 6G-S-TMSI comprises an identifier of the target distributed network node, an AMF set identifier, an AMF pointer, and a Temporary Mobile Subscriber Identity; and sending a synchronization response to the target distributed network node.

50. The apparatus according to Claim 49, **characterized in that** the processor is configured to:
send a paging cycle of each distributed network node to each distributed network node of the 6G distributed network.

51. The apparatus according to Claim 49, **characterized in that** the processor is configured to:
receive paging cycles of the User Equipment UE within all distributed network nodes sent by the UE.

52. A non-transitory readable storage medium, **characterized in that** the non-transitory readable storage medium stores a computer program, and the computer program is used to cause a processor to perform the method according to any one of Claims 1 to 17.
